(19) Europäisches Patentamt
European Patent Office
Office européen des brevets

(11) **EP 2 575 350 A2**

(12) **EUROPEAN PATENT APPLICATION**

(43) Date of publication:
**03.04.2013 Bulletin 2013/14**

(51) Int Cl.:
***H04N 1/409*** (2006.01)

(21) Application number: **12186126.4**

(22) Date of filing: **26.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 EA 201101321**

(71) Applicant: **Zakrytoe Akcionernoe Obshchestvo "Impul's"**
**St.Petersburg 197343 (RU)**

(72) Inventor: **Kosarev, Ruslan Nikolaevich**
**188485 Kingisepp**
**Leningrad region (RU)**

(74) Representative: **Anohins, Vladimirs et al**
**Agency Tria Robit**
**P.O. Box 22**
**1010 Riga (LV)**

(54) **Method for brightness correction of defective pixels of digital monochrome image**

(57)   A method for brightness correction of defective pixels of digital monochrome image consisting in calculation of defective pixel brightness values over its neighborhood, creation of a defective pixel map that is used to determine a defective cluster perimeter preferably quadruply-connected one and calculate brightness value of each defective pixel belonging to such a perimeter; performing such a procedure iteratively until brightness value of each defective pixel has been calculated; defective pixel brightness value is calculated as an average weighed value over neighboring pixel brightness values.

The technical result of the claimed method consists in increased quality of obtained image by means of brightness correction of defective pixels of a digital monochrome image.

Fig. 1

EP 2 575 350 A2

## Description

### Field of the invention

This invention relates to image processing methods, namely, to the brightness correction of defective pixels of a digital monochrome image.

### Previous state of art

Digital imaging detectors contain a great number of similar cells (pixels) some of which or a small group of which can be defective. In images these defects appear as view - dependent areas with lower brightness values than those of neighbouring pixels registering a real signal. Such pixels are called defective pixels; groups of defective pixels are called defective clusters. The most widely-spread defects are as follows.

Dead pixel - this defect results in output signal invariability at different input signal levels.

Hot pixel - this defect results in an incorrect output signal dependence on the input one or it significantly depends on other factors, e.g. temperature or adjacent pixels values.

Dependent pixel - this defect results in pixel signal dependence on adjacent pixel signals.

Input parameters for image correction method are defective pixels coordinates, row and column numbers which are determined at digital detector calibration stage. As a rule, defective pixel brightness value is calculated over adjacent pixels by the use of different calculation techniques. Defective pixel brightness correction contributes to better perception of visualized digital image and simplifies further processing, e.g. during noise reduction, contrast and brightness level calculation, and during object searching in the image etc.

In the present application we claim a brightness correction method of the defective pixels the coordinates of which are determined at the digital detector calibration stage, and are the input parameters for the correction method.

The method [A. Efros and T. Leug. Texture synthesis by non-parametric sampling. Proc. Int. Conf. Computer Vision, pp. 1033-1038, Greece, September 1999] is known. Let $i$ and $j$ be image pixels coordinates, $\upsilon(i)$ and $\upsilon(j)$ brightness values of mentioned pixels, $N(i)$ and $N(j)$ are their neighborhoods. Let a rectangular part of the image with the center in the pixel $i$ be a neighborhood $N(i)$ of pixel $i$.

The known method consists in the fact that when it is necessary to reconstruct signal $\upsilon(i)$, the closest neighborhood $N(j)$ of pixel $j$ over a certain metric $d(i,j)$ is determined using the neighborhood $N(i)$.

$$j = \arg\min(d(i, j))$$

And after the neighborhood $N(j)$ has been determined, signal $\upsilon(i)$ is assumed to be equal to signal $\upsilon(j)$

$$\upsilon(i) = \upsilon(j).$$

The search of N(j) neighborhood can be conducted over the entire image as well as over any limited image area which is called area to be searched. The metric $d(i, j)$ is calculated in the following manner

$$d(i, j) = \frac{1}{Z} \sum_{k \in N(i),\, n \in N(j)} (1 - b(k)) \times (1 - b(n)) \times (\upsilon(k) - \upsilon(n))^2$$

where $b(k)$ is a binary mask of an appropriate neighborhood: $b(k) = 0$, if the signal of $k$ pixel is already known, and $b(k) = 1$, if the calculation of the signal of $k$ pixel is still in progress. Normalizing factor $Z$ is:

$$Z = \sum_{k \in N(i),\, n \in N(j)} (1 - b(k)) \times (1 - b(n))$$

Disadvantages of the known method are as follows.

1) The method is unstable, e.g. if neighborhoods $N(j)$ and $N(\tilde{j})$ are equally close to the $N(i)$neighborhood and, $\upsilon(j)$ and $\upsilon(\tilde{j})$ pixel signals differ from each other distinctly.

2) In the method, reconstructed $\upsilon(i)$ pixel signal is always equal to a certain $\upsilon(j)$ pixel signal from the area to be searched, i.e. the effect of illumination change is not reproduced.

**Disclosure of the invention**

The task of the invention is to correct brightness of defective pixels of a digital monochrome image.
The technical result of the claimed method consists in increased quality of the obtained image by means of brightness correction of defective pixels of a digital monochrome image.
The technical result is achieved through the fact that in the method of brightness correction of defective pixels of a digital monochrome image wherein brightness values of defective pixels are calculated using its neighborhood, according to the invention by means of defective pixels mapping a defective clusters perimeter is determined. After that the brightness values of each defective pixel within that perimeter is calculated; this procedure is conducted iteratively until brightness value of each defective pixel has been calculated wherein defective pixel brightness value is calculated as an average weighed value over neighboring pixel brightness values.
In order to improve image quality a quadruply-connected perimeter is used as a defective clusters perimeter.
In order to improve image quality the brightness value of defective pixel is determined in accordance with Nadaraya-Watson estimates, performing summation over the area to be searched,

$$\upsilon(i) = \frac{\sum\limits_{j} \omega(i,j) \times \upsilon(j)}{\sum\limits_{j} \omega(i,j)}$$

*i,j* are pixel indices;
$N(i)$ is a neighborhood value of i-th pixel;
$\upsilon(i)$ is a brightness value under determination of the i-th defective pixel;
$\upsilon(j)$ is a brightness value of the j-th pixel;
$\omega(i,j)$ weighs calculated using the formula

$$\omega(i,j) = (1 - b(j)) \times \exp\left(-\frac{d(i,j)}{h^2}\right)$$

*h* is a smoothing parameter;
$d(i,j)$ is a distance between neighborhoods $N(i)$ and $N(j)$

$$d(i,j) = \frac{1}{Z(i,j)} \sum\limits_{k \in N(i),\, n \in N(j)} (1 - b(k)) \times (1 - b(n)) \times (\upsilon(k) - \upsilon(n))^2$$

*k, n* are pixel indices;
$Z(i,j)$ is a normalizing factor

$$Z(i,j) = \sum\limits_{k \in N(i),\, n \in N(j)} (1 - b(k)) \times (1 - b(n))$$

$b(k)$ and $b(n)$ are values of *k*-th and n-th pixels in the defective pixel map.

In order to improve image quality and to shorten claimed method software run time the defective pixels perimeter is classified over 3x3 neighbouring pixels, and in order to correct brightness of defective pixels belonging to different classes, different values of neighborhood sizes and areas to be searched are used, at that the following classification and values of neighborhood sizes and area to be searched are used:

clusters with defective pixel quantity less than three, 3x3 pixels neighborhood sizes and 3x3 pixels area to be searched;

clusters with defective pixel quantity four or more, 5x5 pixels neighborhood sizes and 5x5 pixels area be searched;

defective clusters in the shape of a row with one pixel width, 5x5 pixels neighborhood sizes and 3x7 pixels area be searched for a row and 7x3 pixels - for a column;

defective clusters in the shape of a row with two pixels in width, 5x5 pixels neighborhood sizes and 5x7 pixels area be searched for a row and 7x5 pixels - for a column.

Peculiarity of the claimed method is as follows.

1) The method does not depend on defective pixel geometry, e.g. it allows brightness values of defective clusters of any shape to be corrected without any limits.

2) The method realistically reconstructs image texture, for instance, signal at the border of abrupt change of brightness and in the area of local periodic textures.

In order to provide independence of the claimed method on defective cluster geometry the defective pixel correction procedure is performed iteratively - over defective cluster perimeter. Firstly, a defective pixel map is plotted using specified defective pixel coordinates - binary image in which defective pixels are denoted by units, while pixels with real signal - by noughts. A quadruply- connected perimeter is found in the defective pixel map and brightness value of each defective pixel belonging to the perimeter is calculated, after that pixels with corrected brightness are denoted by noughts in the defective pixel map. Further, this procedure continues until brightness value of the last defective pixel has been calculated. A defective cluster perimeter was calculated by means of well-known Look Up table (LUT) method [Gonzalez R., Woods R., Steven L. Eddins. Digital Image Processing using MATLAB. Technosphera, 2006, p. 370].
The essence of correction method of defective pixel brightness is that defective pixel brightness value is calculated as a weighed mean over neighbouring pixels brightness. At that defective pixel neighborhood is considered a regressor and defective pixel brightness value- a dependent variable (the terms of regression analysis are used here). For calculation of defective pixel brightness value that is a dependent variable we use Nadaraya -Watson's estimates from Nonparametric regression method [A. W. Bowman and A. Azzalini, Applied Smoothing Techniques for Data Analysis, Clarendon Press, 1997, p. 49]

$$y = \frac{\sum y_i \times K\left(\frac{\|x_i - x\|}{h}\right)}{\sum K\left(\frac{\|x_i - x\|}{h}\right)}$$

where $K(\cdot)$ is a kernel smoother, $h$ is a smoothing parameter (width of the window). In this case $x$ denotes a defective pixel neighborhood and $y$ is calculated defective pixel brightness value.

**The invention embodiment**

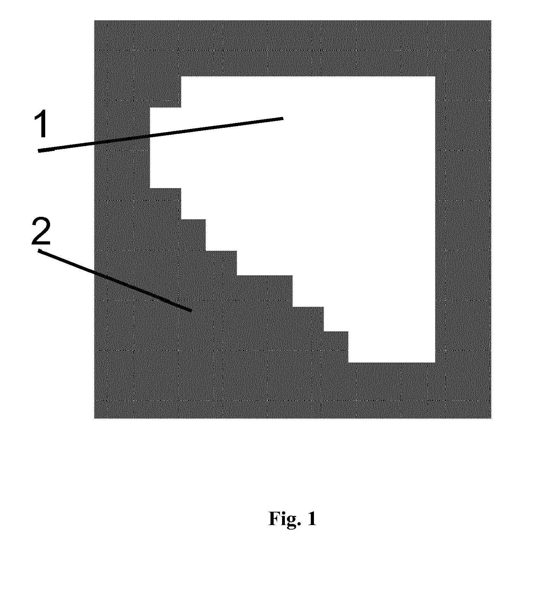

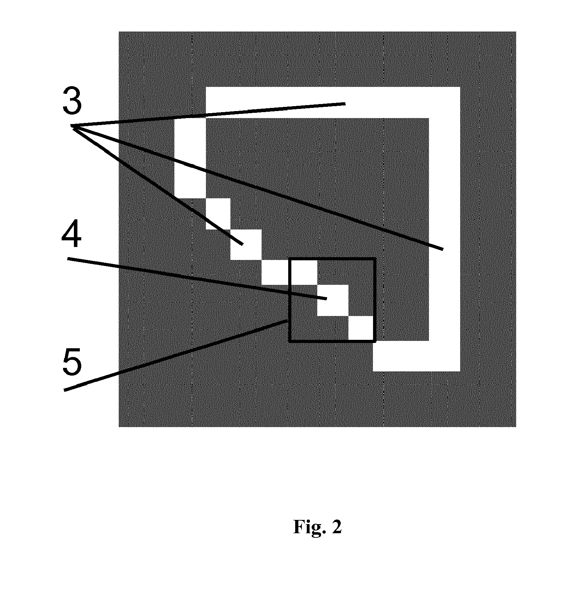

The implementation of the correction method of defective pixel brightness is illustrated by figures 1-6.

Fig. 1 shows defective cluster perimeter of 10x10 pixels in size. Defective pixels being in white are denoted by 1. Pixels with real signal being in grey are denoted by 2.
Fig. 2 shows a quadruply- connected perimeter of the defective cluster shown in fig. 1. In white color and by digit 3 are denoted those pixels which form a quadruply-connected cluster perimeter of defective pixels. One of the perimeter defective pixels is 4, its 3x3pixel neighborhood is 5.

Fig. 3 shows an example of a part of the image containing defective pixels. Defective columns and rows of one pixel in width are 6. Defective columns and rows of two pixels in width are 7. Columns one pixel in width containing defects of dash-dot line type are 8.

Fig. 4 shows an example of a part of the image containing defective pixels. Defective row of one pixel in width is 6. Defective columns and rows of two pixels in width are 7.

Fig.5 shows the image presented in fig. 3 after correction.

Fig.6 shows the image presented in fig. 4 after correction.

In the claimed method brightness value v (i) of the defective pixel *i* is calculated as an average weighed value

$$\upsilon(i) = \frac{\sum_j \omega(i,j) \times \upsilon(j)}{\sum_j \omega(i,j)}$$

where $\omega(i, j)$ is weighting factors with common limit $0 \leq \omega(i, j) \leq 1$ and the term of fraction are normalization conditions. Summation in the above formula is performed over given area to be searched. Let $N(i)$ and $N(j)$ mean mentioned above pixel neighborhood with *i* and *j* coordinates. Let us calculate a distance between these neighborhoods

$$d(i,j) = \frac{1}{Z(i,j)} \sum_{k \in N(i),\, n \in N(j)} (1 - b(k)) \times (1 - b(n)) \times (\upsilon(k) - \upsilon(n))^2$$

where $b(k) = 1$, if the pixel is marked as defective one, and $b(k) = 0$ otherwise. The normalizing factor $Z(i, j)$ is

$$Z(i,j) = \sum_{k \in N(i),\, n \in N(j)} (1 - b(k)) \times (1 - b(n))$$

Weights $\omega(i, j)$ are calculated using the formula

$$\omega(i,j) = (1 - b(j)) \times \exp\left(-\frac{d(i,j)}{h^2}\right)$$

The smoothing parameter *h* is selected being proportional to a smoothing perimeter that is calculated according to Silverman's Rule [A. W. Bowman and A. Azzalini, Applied Smoothing Techniques for Data Analysis, Clarendon Press, 1997, p. 31]

$$h = k \times \left(\frac{4}{3m}\right)^{1/5} \times \sigma_d$$

The dimensionless factor *k* is a parameter of the claimed correction method and is introduced to provide regulation of the smoothing parameter *h*.

Parameters of the claimed correction method of defective pixel brightness are:

1) Vertical and horizontal sizes of defective pixel neighborhood.

2) Vertical and horizontal sizes of area to search.

3) Dimensionless factor $k$.

**Preferable variant of the invention embodiment**

Computational complexity of the claimed method of correction of defective pixel brightness is high enough. The first possibility to accelerate the algorithm without any change in the calculation method is to optimize algorithm parameters in relation to defect geometry. In the claimed method the following classification of defective clusters in 3x3 pixel neighborhood is used.

1) Small clusters a cluster containing 3 defective pixels or less.

2) Large cluster is a cluster containing 4 defective pixels or more.

3) Defective cluster as a row of one pixel in width.

4) Defective cluster as a row of two pixels in width.

For a particular digital detector number of defective clusters of which does not exceed 7x7 pixels and the width of a defective row is no more than two pixels, the following algorithm parameters can be used (see Table).

Table

| Cluster | Definition | Neighborhood dimensions (vertical and horizontal) | Dimensions of the area to be searched (vertical and horizontal) |
|---|---|---|---|
| Small cluster | number of defective clusters is three or less | 3 x 3 | 3 x 3 |
| Large cluster | number of defective clusters is four or more | 5 x 5 | 5 x 5 |
| Row | defective cluster of a row type | 5 x 5 | 3x7 |
|  | defective cluster of a column type | 5 x 5 | 7 x 3 |
| Double row | defective cluster of a double row type | 5 x 5 | 5 x 7 |
|  | defective cluster of a double column type | 5 x 5 | 7 x 5 |

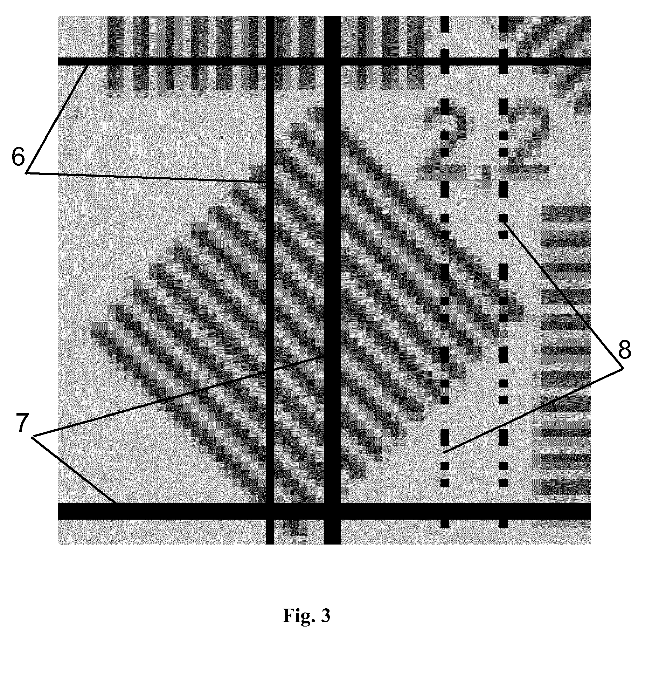

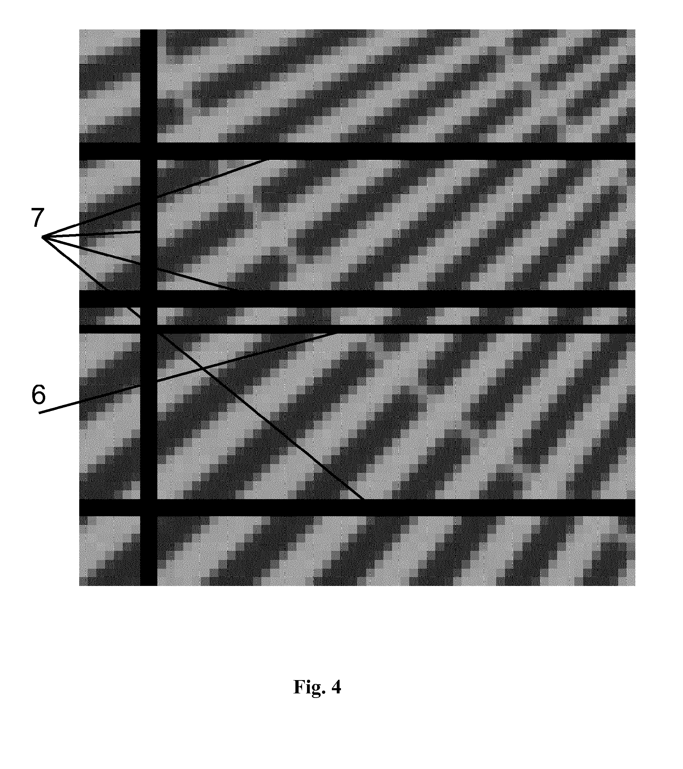

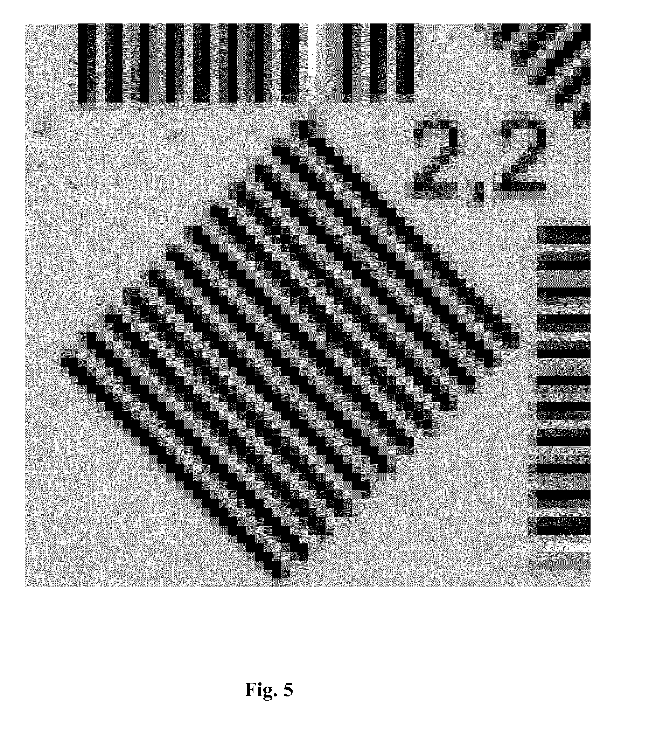

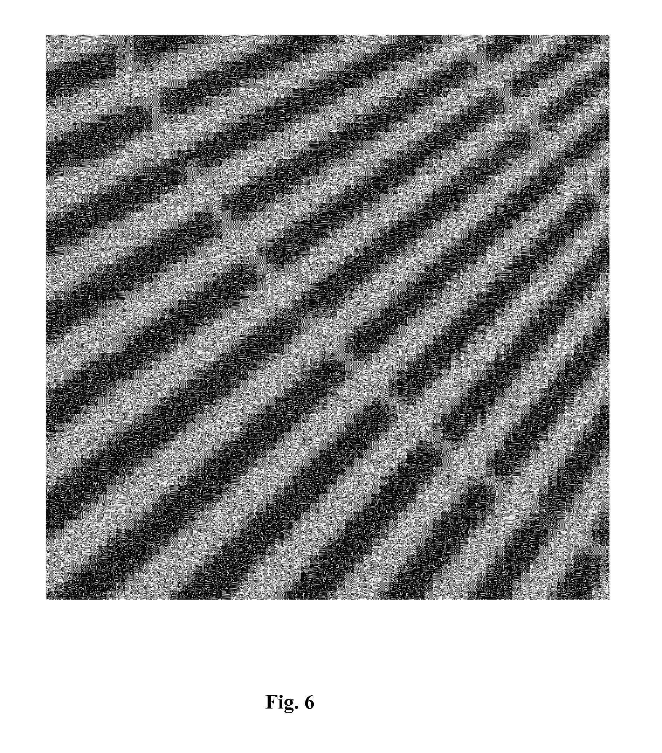

In the examples of correction of defective pixel brightness the parameters given in the table were used, $k$ factor is 1. Figures 3 and 4 show examples of images with defects in form of row-and columns of width one and two pixels, and columns of one pixel in width containing defects of dash-dot line type. Figures 5 and 6 show the same images but after the correction by means of the claimed method.

**Claims**

1. A method for brightness correction of defective pixels of digital monochrome image consisting in calculation of defective pixel brightness values over its neighborhood, **characterized in that** creation of a defective pixel map is used to determine a defective cluster perimeter and calculate a brightness value of each defective pixel belonging to such a perimeter; the procedure is implemented iteratively until brightness value of each defective pixel has been calculated; a defective pixel brightness value is calculated as an average weighed value over neighboring pixel brightness values.

2. The method as claimed in claim 1, wherein a quadruply- connected perimeter is used as a defective cluster perimeter.

3. The method as claimed in claim 2, wherein the defective pixel brightness value is determined using Nadaraya -Watson's estimates, performing summation over the area to be searched,

$$\upsilon(i) = \frac{\sum\limits_{j} \omega(i,j) \times \upsilon(j)}{\sum\limits_{j} \omega(i,j)}$$

*i, j* are pixel indices;
*N(i)* is a neighborhood value of i-th pixel;
$\upsilon$ (*i*) is a brightness value under determination of the i-th defective pixel;
$\upsilon$ (*j*) is a brightness value of the j-th pixel;
$\omega$ (*i, j*) weighs calculated using the formula

$$\omega(i,j) = (1 - b(j)) \times \exp\left(-\frac{d(i,j)}{h^2}\right)$$

h is a smoothing parameter;
*d(i, j)* is a distance between neighborhoods *N(i)* and *N(j)*

$$d(i,j) = \frac{1}{Z(i,j)} \sum_{k \in N(i),\, n \in N(j)} (1 - b(k)) \times (1 - b(n)) \times (\upsilon(k) - \upsilon(n))^2$$

*k, n* are pixel indices;
*Z(i, j)* is a normalizing factor

$$Z(i,j) = \sum_{k \in N(i),\, n \in N(j)} (1 - b(k)) \times (1 - b(n))$$

*b(k)* and *b(n)* are values of *k* -th and n-th pixels in the defective pixel map.

4. The method as claimed in claim 3, wherein defective pixels of the perimeter are classified in relation to their 3x3 pixel neighborhood; and for brightness correction of defective pixels of different classes different neighborhood and to be searched area size values are used; and the following classification and size values of neighborhood and area to be searched is provided:

clusters with defective pixel quantity three or less, 3x3 pixels neighborhood sizes and 3x3 pixels area to be searched;
clusters with defective pixel quantity four or more, 5x5 pixels neighborhood sizes and 5x5 pixels area to be searched;
defective clusters in the shape of a row with one pixel in width, 5x5 pixels neighborhood sizes and 3x7 pixels area to be searched for a row and 7x3 pixels - for a column;
defective clusters in the shape of a row with two pixels in width, 5x5 pixels neighborhood sizes and 5x7 pixels area to be searched for a row and 7x5 pixels - for a column.

Fig. 1

**Fig. 2**

**Fig. 3**

Fig. 4

**Fig. 5**

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. EFROS ; T. LEUG.** Texture synthesis by non-parametric sampling. *Proc. Int. Conf. Computer Vision,* September 1999, 1033-1038